# EUROPÄISCHE PATENTSCHRIFT

(11) **EP 2 301 715 B1**
(45) Veröffentlichungstag und Bekanntmachung des Hinweises auf die Patenterteilung: **04.01.2012**
(21) Anmeldenummer: 09012068.4
(22) Anmeldetag: 23.09.2009
(51) Int. Cl.: B24B 7/17, B24B 49/10, B24B 49/16, G05B 19/406, B23Q 11/04

(54) **Planschleifmaschine und Verfahren zum Betrieb einer Planschleifmaschine**
Surface grinding machine and method for operating and/or maintaining a surface grinding machine
Rectifieuse plane et procédé de fonctionnement et/ou d'entretien d'une rectifieuse plane

(43) Veröffentlichungstag der Anmeldung: 30.03.2011
(73) Patentinhaber: Supfina Grieshaber GmbH & Co. KG, 77709 Wolfach (DE)
(72) Erfinder: Winkens, Markus, Dipl.-Ing. (FH), 77723 Gengenbach (DE); Hofmann, Patrick, 77886 Lauf (DE)
(74) Vertreter: Thielking, Klaus

(56) Entgegenhaltungen:
- EP-A1- 1 754 566
- DE-A1- 10 345 335
- US-A- 3 745 710
- US-A- 4 628 643

## Beschreibung

Die vorliegende Erfindung betrifft eine Planschleifmaschine, umfassend mindestens ein Schleifwerkzeug, einen Werkstückhalter zum Halten mindestens eines Werkstücks, und eine Antriebseinrichtung zum Antreiben des Werkstückhalters in einer Drehrichtung.

Bei Planschleifmaschinen der eingangs genannten Art, welche beispielsweise aus der DE 103 45 335 A1 bekannt ist, wird der Werkstückhalter verwendet, um ein an dem Werkstückhalter gehaltenes Werkstück in Eingriff mit mindestens einem Schleifwerkzeug zu bringen. Hierbei ist es erforderlich, ein unbearbeitetes Werkstück mit einer hohen Genauigkeit an dem Werkstückhalter fixieren zu können, so dass bei Einführung des Werkstücks in den Bearbeitungsbereich des Schleifwerkzeugs das Werkstück, der Werkstückhalter und das Schleifwerkzeug nicht miteinander verkanten. Eine entsprechende sorgfältige Abstimmung ist im Bereich eines Werkstückauslaufs des Bearbeitungsbereichs erforderlich, um in diesem Bereich ein Verkanten zwischen dem Werkstück, dem Werkstückhalter, dem Schleifwerkzeug und einer sich an den Bearbeitungsbereich anschließenden Auslaufführung zu vermeiden.

Darüber hinaus ist auch eine Übergabe von unbearbeiteten Werkstücken aus einer gegebenenfalls vorhandenen Bestückungseinrichtung in Werkstückaufnahmen des Werkstückhalters hinein kritisch. Auch in diesem Bereich ist es möglich, dass bei nicht exakter Abstimmung aller Bauteile ein Werkstück mit diesen Bauteilen verkantet. All dies führt dazu, dass eine Planschleifmaschine äußerst sorgfältig eingerichtet werden muss, um eine Beschädigung von Bauteilen der Planschleifmaschine und/oder von Werkstücken möglichst weitgehend zu vermeiden. Es kann aber auch bei einer sehr sorgfältig und zeitaufwändig eingerichteten Planschleifmaschine vorkommen, dass Werkstücke verkanten und die Planschleifmaschine beschädigt wird.

Aus der EP 1 754 566 A1 ist ein Rundschalttisch mit einem Teller bekannt, bei welchem auf Druck und/oder Zug reagierende Messaufnehmer geringfügige Verformungen an Teilen des Tellerantriebs erfassen, um bei einer Blockierung des Tellers den den Teller antreibenden Motor abzuschalten.

Hiervon ausgehend liegt der vorliegenden Erfindung die Aufgabe zugrunde, Beschädigungen einer Planschleifmaschine zu verhindern.

Diese Aufgabe wird bei einer Planschleifmaschine der eingangs genannten Art erfindungsgemäß dadurch gelöst, dass zur Erfassung des Energiebedarfs der Antriebseinrichtung mindestens eine Istwert-Erfassungseinrichtung zur Erfassung mindestens eines Istwerts mindestens eines eine Leistung (P) und/oder einen Strom (I) und/oder eine Spannung (V) betreffenden Parameters, welcher den zum Antrieb des Werkstückhalters erforderlichen Energiebedarf der Antriebseinrichtung charakterisiert, vorgesehen ist, und ferner gelöst durch mindestens eine Speichereinrichtung zur Speicherung mindestens eines maximalen Sollwerts, durch mindestens eine Auswerteeinrichtung, mittels welcher unter Verwendung des mindestens einen Sollwerts eine Auswertung durchführbar ist, ob der mindestens eine Istwert und/oder mindestens eine aus dem mindestens einen Istwert abgeleitete Größe zulässig oder unzulässig ist, und durch mindestens eine in Abhängigkeit der Auswertung betreibbare Ansteuereinrichtung zur Ansteuerung der Antriebseinrichtung, wobei mittels der Ansteuereinrichtung eine Energiezufuhr zu der Antriebseinrichtung unterbrechbar ist oder die Energiezufuhr zumindest so stark verringerbar ist, dass zulässige Istwerte erfassbar sind.

Die erfindungsgemäße Planschleifmaschine ermöglicht es, den Energiebedarf der Antriebseinrichtung zu erfassen und mittels einer Auswerteeinrichtung einen unzulässig hohen Energiebedarf zu detektieren. Die Antriebseinrichtung ist von einer Ansteuereinrichtung ansteuerbar, welche mit der Auswerteeinrichtung gekoppelt ist. Bei Detektion eines unzulässig hohen Energiebedarfs ist es möglich, dass die Ansteuereinrichtung eine Energiezufuhr zu der Antriebseinrichtung unterbricht oder zumindest so stark verringert, dass zulässige Istwerte erfasst werden können. Die erfindungsgemäße Planschleifmaschine ermöglicht es, rasch und unmittelbar nach einem Verkanten eines Werkstücks die Energiezufuhr zu unterbrechen oder zu verringern. Hierdurch können eingangs beschriebene Beschädigungen der Planschleifmaschine verhindert werden.

Die erfindungsgemäße Planschleifmaschine ist besonders vorteilhaft, wenn ein scheibenförmiger Werkstückhalter verwendet wird, dessen Bauhöhe beispielsweise maximal ungefähr 1 cm oder nur wenige Millimeter beträgt. Ein solcher flacher Werkstückhalter hat den Vorteil, dass auch die Bearbeitung sehr flacher Werkstücke möglich ist, hat jedoch den Nachteil, dass der Werkstückhalter in sich keinen hohen Verformungswiderstand aufweist. Da die Werkstückhalter eine im Vergleich zu ihrer Dicke großflächige Ausdehnung mit einem Durchmesser von 50 cm bis 100 cm oder darüber hinaus aufweisen können, sind diese besonders anfällig gegen eine Verformung aufgrund eines Verkantens des Werkstückhalters mit einem Werkstück und/oder mit weiteren Teilen der Planschleifmaschine.

Durch die Unterbrechung oder Verringerung der Energiezufuhr können auch weitere Bauteile der Planschleifmaschine vor Beschädigungen geschützt werden, beispielsweise im Bereich eines Werkstückeinlaufs und eines Werkstückauslaufs des Bearbeitungsbereichs. Gleiches gilt für den Schutz einer gegebenenfalls vorhandenen Bestückungseinrichtung, mittels welcher der Werkstückhalter mit unbearbeiteten Werkstücken bestückt werden kann. Auch eine gegebenenfalls im Bereich des Werkstückhalters angeordnete Messeinrichtung zur Messung einer Geometrie eines bearbeiteten Werkstücks kann vor Beschädigungen geschützt werden. Gleichzeitig erhöht sich die Arbeitssicherheit für das Bedienpersonal.

Im Rahmen der Erfindung wurde erkannt, dass ein Parameter, welcher den zum Antrieb des Werkstückhalters erforderlichen Energiebedarf charakterisiert als Indikator für unzulässige Betriebszustände der Planschleifmaschine verwendet werden kann. Während der Bearbeitung eines Werkstücks wirken Reibkräfte zwischen dem zu bearbeitenden Werkstück und dem Schleifwerkzeug. Zur Überwindung dieser Reibkräfte muss der Antriebseinrichtung eine entsprechende Energiemenge bereitgestellt werden. Im Falle eines Verkantens eines Werkstücks mit Bauteilen der Planschleifmaschine erhöht sich der Energiebedarf der Antriebseinrichtung, da diese bei einem Widerstand das Bestreben hat, ein von der Ansteuereinrichtung vorgegebenes Drehmoment aufrecht zu halten.

Die Istwerte des den Energiebedarf charakterisierenden Parameters können beispielweise kontinuierlich erfasst und direkt ausgewertet werden. Es ist auch möglich, die Istwerte während einer vorgebbaren Zeitdauer zu erfassen und hieraus eine Größe abzuleiten, beispielsweise einen mittleren Istwert.

Im einfachsten Fall wird ein erfasster Istwert mit dem in der Speichereinrichtung hinterlegten Sollwert verglichen, um mit Hilfe der Auswerteeinrichtung festzustellen, ob der Istwert den Sollwert in unzulässiger Weise erreicht oder überschreitet. Zusätzlich oder alternativ hierzu ist es möglich, aus dem erfassten Istwert abgeleitete Größen mit einem entsprechenden Sollwert zu vergleichen.

Die erfindungsgemäße Planschleifmaschine weist einen einfachen Aufbau auf, welcher preisgünstig mit wenigen elektrischen Bauteilen realisierbar ist. Insbesondere ist es möglich, auf Eingriffe in die mechanische Struktur zwischen der Antriebseinrichtung und dem Werkstückhalter zu verzichten. Somit können auch Bestandsmaschinen nachgerüstet werden. Da der Sollwert variabel festlegbar ist, kann ein breiter Auslösemomentbereich abgedeckt werden, um unterschiedlichsten Fertigungsaufgaben gerecht zu werden. Darüber hinaus ist es auch möglich, anhand des Verlaufs der erfassten Istwerte die Drehposition der Antriebseinrichtung und/oder des Werkstückhalters zu bestimmen, ohne hierfür separate Positionsgeber vorsehen zu müssen.

Der Parameter, dessen Istwert zu erfassen ist, betrifft eine Leistung und/oder einen Strom und/oder eine Spannung. Üblicherweise stehen für die Antriebseinrichtung eine Wechselspannungsquelle mit einer bestimmten Nennspannung zur Verfügung. Daher ist es insbesondere vorteilhaft, den Istwert des (drehmomentbildenden) Stroms zu erfassen.

Nach einer Ausführungsform der Erfindung ist vorgesehen, dass die mindestens eine aus dem mindestens einen Istwert abgeleitete Größe eine Veränderung des Istwerts über einen vorgegebenen Zeitraum betrifft. Beispielsweise kann aus dem Verlauf von Strom-Istwerten die erste Ableitung gebildet werden, um unzulässig starke Erhöhungen des Energiebedarfs feststellen zu können.

Die Erfindung betrifft ferner ein Verfahren zum Betrieb einer Planschleifmaschine, welche mindestens ein Schleifwerkzeug, einen Werkstückhalter zum Halten mindestens eines Werkstücks, und eine Antriebseinrichtung zum Antreiben des Werkstückhalters in einer Drehrichtung umfasst, wobei der Werkstückhalter rotierend angetrieben und ein Werkstück mittels des Schleifwerkzeugs bearbeitet wird.

Der vorliegenden Erfindung liegt die weitere Aufgabe zugrunde, ein Verfahren zum Betrieb einer Planschleifmaschine zu schaffen, mit welchem Beschädigungen der Planschleifmaschine verhindert werden können.

Diese Aufgabe wird bei einem vorstehend genannten Verfahren erfindungsgemäß dadurch gelöst, dass das zur Erfassung des Energiebedarfs der Antriebseinrichtung mindestens ein Istwert mindestens eines eine Leistung (P) und/oder einen Strom (I) und/oder eine Spannung (V) betreffenden Parameters erfasst wird, welcher den zum Antrieb des Werkstückhalters erforderlichen Energiebedarf der Antriebseinrichtung charakterisiert, dass unter Verwendung mindestens eines maximalen Sollwerts ausgewertet wird, ob der mindestens eine Istwert und/oder mindestens eine aus dem mindestens einen Istwert abgeleitete Größe zulässig oder unzulässig ist, und dass für den Fall, dass der mindestens eine Istwert und/oder die aus dem mindestens einen Istwert abgeleitete Größe unzulässig ist, eine Energiezufuhr zu der Antriebseinrichtung unterbrochen wird oder die Energiezufuhr zumindest so stark verringert wird, dass zulässige Istwerte erfasst werden können.

Vorteile und Ausgestaltungen des erfindungsgemäßen Verfahrens sind zum Teil bereits vorstehend im Zusammenhang mit den Vorteilen und Ausgestaltungen der erfindungsgemäßen Planschleifmaschine erläutert worden. Daher wird im Folgenden lediglich auf jene Vorteile und Ausgestaltungen des erfindungsgemäßen Verfahrens eingegangen, welche nicht bereits vorstehend im Zusammenhang mit den Vorteilen und Ausgestaltungen der erfindungsgemäßen Planschleifmaschine erläutert worden sind.

Ein besonders guter Anhaltspunkt darüber, dass eine Energiezufuhr zu der Antriebseinrichtung unterbrochen oder verringert werden muss, kann erhalten werden, wenn die Bearbeitung des Werkstücks mit konstanter Drehzahl erfolgt. Zwar schwankt auch bei einer konstanten Drehzahl ein zum Antrieb des Werkstückhalters erforderlicher Energiebedarf in Abhängigkeit der Größe der Werkstückoberfläche, welche in einem planschleifenden Eingriff mit dem Schleifwerkzeug steht. Bei einem Antrieb mit konstanter Drehzahl ist diese Schwankung aber weniger stark ausgeprägt als bei einem Antrieb mit variierender Drehzahl. Daher sind über die üblichen Schwankungen hinausgehenden Energiebedarfsspitzen besonders einfach detektierbar.

Eine Ausführungsform der Erfindung sieht vor, dass der Sollwert ermittelt wird, indem während der Bearbeitung mindestens eines Referenzwerkstücks mittels mindestens eines Referenzwerkzeugs ein Referenzwert des Parameters erfasst und dieser Referenzwert zur Bestimmung des Sollwerts verwendet wird, insbesondere in Abhängigkeit eines Sicherheitszuschlags oder -faktors. Dies ermöglicht eine variable Anpassung des Sollwerts an unterschiedliche Fertigungsaufgaben. Es ist möglich, dass das Referenzwerkstück durch ein neues Schleifwerkzeug gebildet ist, welches beispielsweise einmalig abgerichtet wurde, bevor es dann zur planschleifenden Bearbeitung eines Werkstücks eingesetzt wird. Das Referenzwerkzeug kann aber auch durch ein Werkzeug gebildet sein, welches ausschließlich zur Bestimmung des Sollwerts verwendet wird.

Die zu bearbeitenden Werkstücke weisen üblicherweise mindestens eine für den Planschleifvorgang relevante Abmessung auf. Insbesondere handelt es sich dabei um die Werkstückdicke, welche im Ausgangszustand, also vor der Bearbeitung durch die Planschleifmaschine, innerhalb einer vorgebbaren Toleranz liegen müssen. Daher ist es vorteilhaft, wenn als Referenzwerkstück ein Werkstück verwendet wird, welches bezogen auf die zulässige Toleranz mittige oder weitestgehend mittige Abmessungen aufweist.

Um zu verhindern, dass ein Bearbeitungsvorgang eines Werkzeugs in unerwünschter Weise abgebrochen wird, weil ein leicht erhöhter Energiebedarf festgestellt wurde, ist es vorteilhaft, einen Sollwert um einen Sicherheitszuschlag oder um einen Sicherheitsfaktor zu erhöhen. Beispielsweise kann ein Sollwert bestimmt werden, indem ausgehend von dem Referenzwert dieser um einen Wert von zwischen ungefähr 10 % und ungefähr 25 % erhöht wird.

Die vorstehend beschriebene Sollwertermittlung kann insbesondere automatisiert durchgeführt werden.

Die Unterbrechung oder die Verringerung der Energiezufuhr zu der Antriebseinrichtung kann von einer Ausgabe von Signalen oder Hinweisen an das Bedienpersonal der Planschleifmaschine begleitet werden. Hierdurch kann das Bedienpersonal zeitnah prüfen, ob weitere Eingriffe und/oder eine Neueinrichtung der Planschleifmaschine erforderlich sind.

Von besonderer Bedeutung ist die Realisierung des erfindungsgemäßen Verfahrens in Form eines Computerprogramms, welches insbesondere in einer Maschinensteuerung der Planschleifmaschine hinterlegt ist.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Figur 1: eine Draufsicht einer Ausführungsform einer Planschleifmaschine, welche eine Antriebseinrichtung zum Drehantrieb eines Werkstückhalters umfasst;
- Figur 2: ein Diagramm, in welchem die Drehzahl und der Strombedarf der Antriebseinrichtung über der Zeit aufgetragen sind;
- Figur 3: einen in Figur 2 mit III markierten Diagrammausschnitt (erste Vergrößerungsstufe):
- Figur 4: einen in Figur 3 mit IV markierten Diagrammausschnitt (zweite Vergrößerungsstufe);
- Figur 5: eine der Figur 2 entsprechende Darstellung mit einem Diagramm, in welchem die Wirkleistung und die Auslastung der Antriebseinrichtung über der Zeit aufgetragen sind; und
- Figur 6: einen in Figur 5 mit VI markierten Diagrammausschnitt.

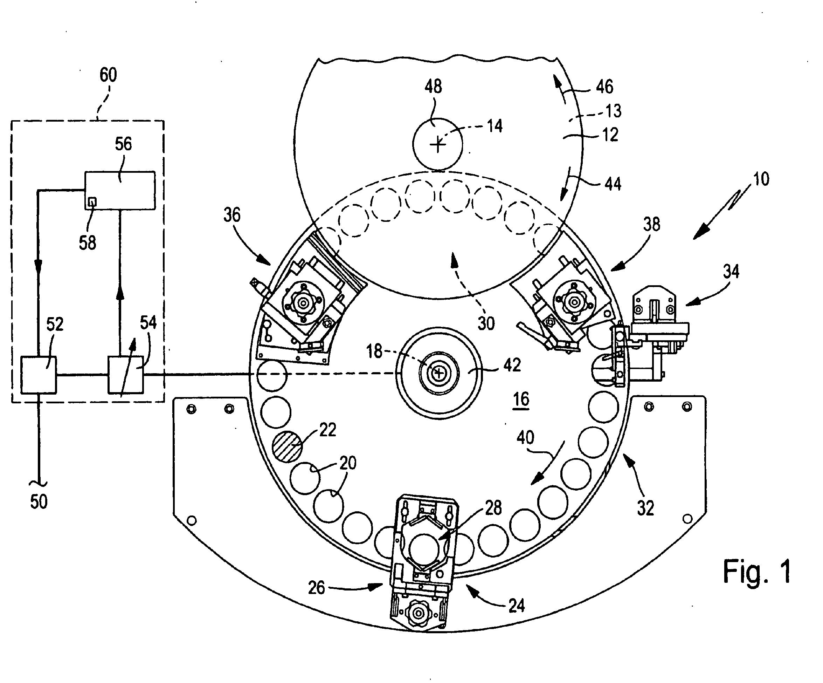

Eine Ausführungsform einer in Figur 1 insgesamt mit dem Bezugszeichen 10 bezeichneten Planschleifmaschine ist als Doppelplanschleifmaschine ausgebildet und umfasst zwei scheibenförmige Schleifwerkzeuge, von denen in Figur 1 ein oberes Schleifwerkzeug 12 dargestellt und ein unteres Schleifwerkzeug mit dem Bezugszeichen 13 angedeutet ist. Das obere Schleifwerkzeug 12 und das untere Schleifwerkzeug 13 sind jeweils um eine Schleifwerkzeugachse 14 drehbar antreibbar.

Die Planschleifmaschine 10 umfasst ferner einen scheibenförmigen Werkstückhalter 16, welcher um eine Werkstückhalterachse 18 drehbar antreibbar ist. Die Werkstückhalterachse 18 und die Schleifscheibenachse 14 sind zueinander parallel oder um wenige Grad, beispielsweise bis maximal 5°, relativ zueinander geneigt.

Der Werkstückhalter 16 umfasst eine Mehrzahl von Werkstückaufnahmen 20, welche vorzugsweise in radialer Richtung relativ zu der Werkstückhalterachse 18 identisch beabstandet sind und ferner vorzugsweise in Umfangsrichtung gesehen relativ zueinander identisch beabstandet sind.

Vorzugsweise weist der Werkstückhalter 16 mindestens zwei, insbesondere mindestens zehn, Werkstückaufnahmen 20 auf. Eine Werkstückaufnahme 20 kann beispielsweise durch eine lochförmige Materialaussparung gebildet sind, welche zur Aufnahme eines Werkstücks dient. In Figur 1 ist ein Werkstück 22 aus Gründen der Übersichtlichkeit schraffiert dargestellt.

Die Planschleifmaschine 10 weist einen Bestückungsbereich 24 auf, in welchem unbearbeitete Werkstücke 22 in eine Werkstückaufnahme 20 eingelegt werden können. Das Einlegen kann von Hand erfolgen oder mittels einer Bestückungseinrichtung 26, welche insbesondere ein Magazin 28 zur Bevorratung von unbearbeiteten Werkstücken 22 aufweist.

Die Planschleifmaschine 10 umfasst ferner einen Bearbeitungsbereich 30, in welchem an dem Werkstückhalter 16 gehaltene Werkstücke 22 in planschleifendem Eingriff mit dem oberen Schleifwerkzeug 12 und mit dem unteren Schleifwerkzeug 13 stehen.

Ferner umfasst die Planschleifmaschine 10 einen Entnahmebereich 32, in welchem Werkstücke 22 aus den Werkstückaufnahmen 20 entnommen werden können.

In dem Bearbeitungsbereich 30 sind das obere Schleifwerkzeug 12 und das untere Schleifwerkzeug 13 zueinander beabstandet, so dass ein Schleifspalt entsteht, in welchem Werkstücke 22 aufgenommen und bezogen auf die Schwerkraftrichtung nach unten und nach oben abgestützt sind. Außerhalb des Bearbeitungsbereichs 30 sind die Werkstücke 22 in dem Bestückungsbereich 24 und in dem Entnahmebereich 32 nach unten hin mit Hilfe in der Zeichnung nicht dargestellter Werkstückauflagen abgestützt.

Vorzugsweise umfasst die Planschleifmaschine 10 eine Messeinrichtung 34, welche in einem Eingangsbereich des Entnahmebereichs 32 angeordnet ist. Mit Hilfe der Messeinrichtung 34 wird eine parallel zur Erstreckungsrichtung des Schleifspalts anliegende Dicke eines Werkstücks 22 gemessen.

Die Planschleifmaschine 10 ferner im Bereich eines Einlaufs des Bearbeitungsbereichs 30 eine erste Führungseinrichtung 36 und im Bereich eines Auslaufs des Bearbeitungsbereichs 30 eine zweite Führungseinrichtung 38 auf.

Zum Antrieb des Werkstückhalters 16 um die Werkstückhalterachse 18 in einer Drehrichtung 40 ist ein Antriebseinrichtung 42 vorgesehen, welche insbesondere in Form eines Elektromotors ausgebildet ist.

Zum Antrieb des Schleifwerkzeugs 12 und/oder des Schleifwerkzeugs 13 um die Werkstückhalterachse 18 in einer Drehrichtung 44 oder 46 ist ein Schleifwerkzeugantrieb 48 vorgesehen, welcher insbesondere in Form eines Elektromotors ausgebildet ist.

Die Antriebseinrichtung 42 wird von einer Energiequelle 50, beispielsweise in Form einer Dreiphasenwechselstromquelle, mit Energie versorgt. Die Steuerung der der Antriebseinrichtung 42 zugeführten Energie erfolgt über eine Ansteuereinrichtung 52. Der für den Betrieb des Werkzeugantriebs 48 erforderliche Energiebedarf wird mittels einer Istwert-Erfassungseinrichtung 54 erfasst. Diese Einrichtung erfasst insbesondere den Istwert des Stroms, welcher erforderlich ist, um den Werkstückhalter 16 mit einer vorgebbaren Werkstückhalterdrehzahl anzutreiben.

Die Istwert-Erfassungseinrichtung 54 kommuniziert mit einer Auswerteeinrichtung 56, welche eine Speichereinrichtung 58 zur Speicherung mindestens eines maximalen Sollwerts und/oder umfasst. Die Ansteuereinrichtung 52, die Istwert-Erfassungseinrichtung 54, die Auswerteeinrichtung 56 und/oder die Speichereinrichtung 58 können auch in einer gemeinsamen Steuerungseinheit 60 der Planschleifmaschine 10 integriert sein, welche in Figur 1 mit gestrichelten Linien dargestellt ist.

Die Auswerteeinrichtung 58 ist insbesondere in Form eines Vergleichers ausgebildet und ermöglicht eine Auswertung, ob mittels der Istwert-Erfassungseinrichtung 54 erfasste Istwerte oder hieraus abgeleitete Größen zulässig oder unzulässig sind, indem ein Istwert oder eine aus dem Istwert abgeleitete Größe mit dem in der Speichereinrichtung 58 hinterlegten Sollwert verglichen wird. In Abhängigkeit dieser Auswertung steuert die Auswerteeinrichtung 58 dann die Ansteuereinrichtung 52 an.

Die Planschleifmaschine 10 funktioniert folgendermaßen:

Unbearbeitete Werkstücke 22 werden insbesondere mit Hilfe der Bestückungseinrichtung 26 in die Werkstückaufnahmen 20 eingelegt. Durch Drehung des Werkstückhalters 16 mittels des Werkstückhalterantriebs 42 wird ein an dem Werkstückhalter 16 gehaltenes Werkstück 22 mittels der ersten Führungseinrichtung 36 in den Bearbeitungsbereich 30 eingebracht, in welchem das zu bearbeitende Werkstück 22 zwischen dem oberen Schleifwerkzeug 12 und dem unteren Schleifwerkzeug 13 angeordnet ist. Hierbei erfolgt eine planschleifende Bearbeitung von einander gegenüberliegenden Oberflächen des Werkstücks 22. Nach Bearbeitung eines Werkstücks 22 wird dieses über die zweite Führungseinrichtung 38 in den Entnahmebereich 32 gebracht, wo es von dem Werkstückhalter 16 entfernt werden kann. Gegebenenfalls erfolgt eine Messung der Dicke eines bearbeiteten Werkstücks 22 mittels der Messeinrichtung 34.

Während des Betriebs der Planschleifmaschine 10 kann es vorkommen, dass ein Werkstück 22 verkantet, beispielsweise im Bereich des Ausgangs des Magazins 28 in Richtung auf den Werkstückhalter 16 oder im Bereich des Eingangs der ersten Führungseinrichtung 36 oder des Eingangs der zweiten Führungseinrichtung 38.

Die Möglichkeit des Verkantens des Werkstücks 22 ist nicht nur dadurch begründet, dass möglicherweise Teile der Planschleifmaschine 10 nicht exakt eingerichtet wurden, sondern auch dadurch, dass Werkstücke 22 in dem Bearbeitungsbereich 30 durch Einsatz von Kühlflüssigkeit aufschwimmen, so dass diese mit den Eingängen der Führungseinrichtungen 36, 38 oder mit einer Berandung der Schleifwerkzeuge 12, 13 kollidieren.

Für den vorstehend beschriebenen Fall des Verkantens eines Werkstücks 22 benötigt die Antriebseinrichtung 42 mehr Energie, um ein beispielsweise von der Ansteuereinrichtung 52 vorgegebenes Drehmoment zu erreichen. Dies führt dazu, dass sich von der Istwert-Erfassungseinrichtung 54 erfasste Strom-Istwerte erhöhen. Diese Strom-Istwerte können mit Hilfe der Auswerteeinrichtung 56 unter Zuhilfenahme der in der Speichereinrichtung 58 abgelegten Sollwerte ausgewertet werden. Bei einem unzulässig überhöhten Strombedarf löst die Ansteuereinrichtung 52 die Unterbrechung der Energiezufuhr zu der Antriebseinrichtung 42 aus.

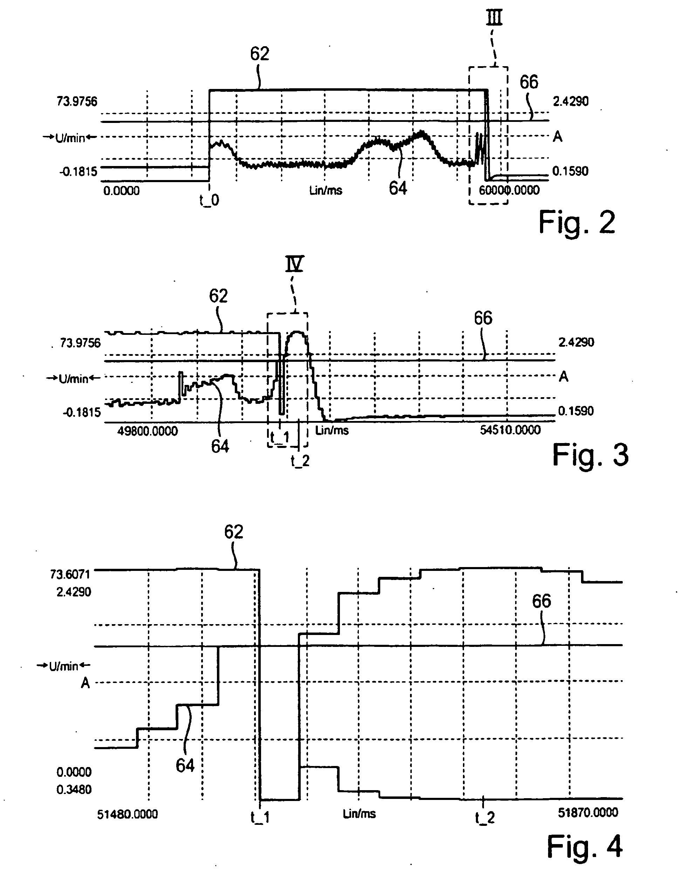

In den Diagrammen gemäß Figuren 2 bis 4 ist ein Verlauf 62 einer Drehzahl n der Antriebseinrichtung 42 und ein Verlauf 64 eines Strom-Istwerts I dargestellt. Dabei ist der Beginn der Ist-Werterfassung in Figur 2 mit dem Zeitpunkt t_0 markiert. Da sich in Abhängigkeit der Drehposition des Werkstückhalters 16 mehr oder weniger Werkstücke 22 oder unterschiedliche Flächenanteile eines Werkstücks 22 in einem planschleifenden Eingriff mit den Schleifwerkzeugen 12, 13 befinden, schwanken die Reibkräfte entsprechend. Hierdurch schwankt das Drehmoment der Antriebseinrichtung 42 in entsprechender Weise und somit auch der Strom-Istwert in einem dem Zeitpunkt t_0 folgenden Zeitraum.

Zu einem in Figuren 3 und 4 mit t_1 markierten Zeitpunkt verkantet ein Werkstück 22 mit einem Bauteil der Planschleifmaschine 10. Hierdurch fällt die Drehzahl n ab. Gleichzeitig steigt der Energiebedarf der Antriebseinrichtung 42, welche das Bestreben hat, eine vorgegebene Drehzahl aufrecht zu erhalten. Der steigende Energiebedarf korreliert mit einer starken Erhöhung des Strombedarfs und der Strom-Istwerte. Zu einem Zeitpunkt t_2 ist der Strombedarf maximal. Durch Vergleich der Strom-Istwerte mit einem maximalen Sollwert 66 wird dann festgestellt, dass die Strom-Istwerte unzulässig erhöht sind. Um eine Beschädigung der Planschleifmaschine zumindest weitestgehend auszuschließen, wird die Antriebseinrichtung 42 unverzüglich gestoppt und die Energiezufuhr zu der Antriebseinrichtung 42 unterbrochen.

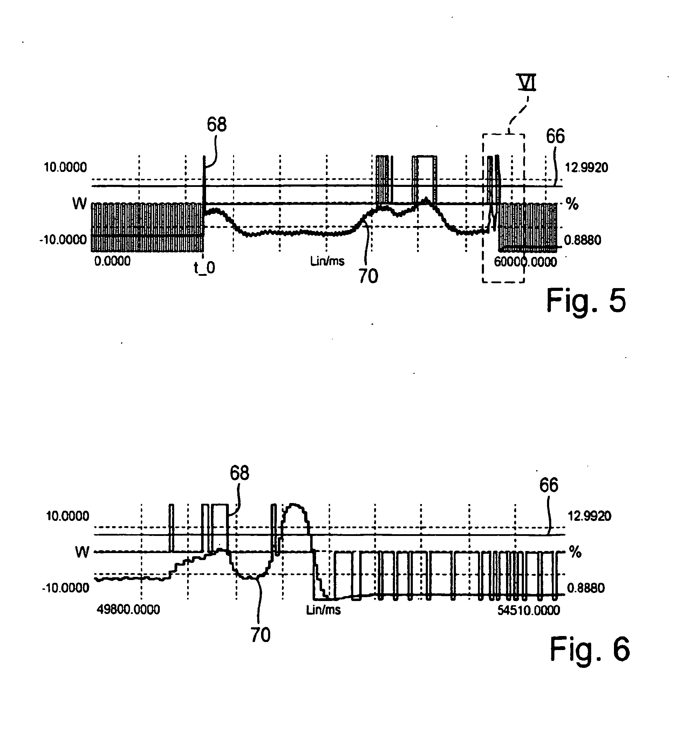

In den Diagrammen gemäß Figuren 5 und 6 ist für das vorstehend unter Bezugnahme auf die Figuren 2 bis 4 beschriebene Beispiel der Verlauf 68 einer Wirkleistung P der Antriebseinrichtung 42 und der Verlauf 70 der Auslastung der Antriebseinrichtung 42 dargestellt. In diesem Fall wird der maximale Sollwert 66 nicht als maximaler Stromwert in der Einheit Ampere sondern dimensionslos als maximale Auslastung vorgegeben.

Alternativ zu einer Unterbrechung der Energiezufuhr wird die Energiezufuhr solange verringert, bis wieder zulässige Strom-Istwerte erfasst werden. Gegebenenfalls kann während der Verringerung oder im Anschluss an die Verringerung der Energiezufuhr ermittelt werden, ob sich die Antriebseinrichtung 42 und somit auch der Werkstückhalter 16 bewegt oder stillsteht. Für den Fall eines Stillstands des Werkstückhalters 16 kann dann die Energiezufuhr zu der Antriebseinrichtung 42 abgeschaltet werden.

## Patentansprüche

1. Planschleifmaschine (10), umfassend mindestens ein Schleifwerkzeug (12, 13), einen Werkstückhalter (16) zum Halten mindestens eines Werkstücks (22), und eine Antriebseinrichtung (42) zum Antreiben des Werkstückhalters (16) in einer Drehrichtung, **dadurch gekennzeichnet, dass** zur Erfassung des Energiebedarfs der Antriebseinrichtung (42) mindestens eine Istwert-Erfassungseinrichtung (54) zur Erfassung mindestens eines Istwerts (64, 70) mindestens eines eine Leistung (P) und/oder einen Strom (I) und/oder eine Spannung (V) betreffenden Parameters, welcher den zum Antrieb des Werkstückhalters (16) erforderlichen Energiebedarf der Antriebseinrichtung (42) charakterisiert, vorgesehen ist, ferner **gekennzeichnet durch** mindestens eine Speichereinrichtung (58) zur Speicherung mindestens eines maximalen Sollwerts (66), **durch** mindestens eine Auswerteeinrichtung (56), mittels welcher unter Verwendung des mindestens einen Sollwerts (66) eine Auswertung durchführbar ist, ob der mindestens eine Istwert (64, 70) und/oder mindestens eine aus dem mindestens einen Istwert (64, 70) abgeleitete Größe zulässig oder unzulässig ist, und **durch** mindestens eine in Abhängigkeit der Auswertung betreibbare Ansteuereinrichtung (52) zur Ansteuerung der Antriebseinrichtung (42), wobei mittels der Ansteuereinrichtung (52) eine Energiezufuhr zu der Antriebseinrichtung (42) unterbrechbar ist oder die Energiezufuhr zumindest so stark verringerbar ist, dass zulässige Istwerte erfassbar sind.

2. Planschleifmaschine (10) nach Anspruch 1, **dadurch gekennzeichnet, dass** die mindestens eine aus dem mindestens einen Istwert (64, 70) abgeleitete Größe eine Veränderung des Istwerts (64, 70) über einen vorgegebenen Zeitraum betrifft.

3. Verfahren zum Betrieb einer Planschleifmaschine (10), welche mindestens ein Schleifwerkzeug (12, 13), einen Werkstückhalter (16) zum Halten mindestens eines Werkstücks (22), und eine Antriebseinrichtung (42) zum Antreiben des Werkstückhalters (16) in einer Drehrichtung umfasst, wobei der Werkstückhalter (16) rotierend angetrieben und ein Werkstück (22) mittels des Schleifwerkzeugs (12, 13) bearbeitet wird, **dadurch gekennzeichnet, dass** zur Erfassung des Energiebedarfs der Antriebseinrichtung (42) mindestens ein Istwert (64, 70) mindestens eines eine Leistung (P) und/oder einen Strom (I) und/oder eine Spannung (V) betreffenden Parameters erfasst wird, welcher den zum Antrieb des Werkstückhalters (16) erforderlichen Energiebedarf der Antriebseinrichtung (42) charakterisiert, dass unter Verwendung mindestens eines maximalen Sollwerts (66) ausgewertet wird, ob der mindestens eine Istwert (64, 70) und/oder mindestens eine aus dem mindestens einen Istwert (64, 70) abgeleitete Größe zulässig oder unzulässig ist, und dass für den Fall, dass der mindestens eine Istwert (64, 70) und/oder die aus dem mindestens einen Istwert (64, 70) abgeleitete Größe unzulässig ist, eine Energiezufuhr zu der Antriebseinrichtung (42) unterbrochen wird oder die Energiezufuhr zumindest so stark verringert wird, dass zulässige Istwerte (64, 70) erfasst werden können.

4. Verfahren nach Anspruch 3, **dadurch gekennzeichnet, dass** die mindestens eine aus dem mindestens einen Istwert (64, 70) abgeleitete Größe die Veränderung des Istwerts (64, 70) über einen vorgegebenen Zeitraum betrifft.

5. Verfahren nach einem Ansprüche 3 oder 4, **dadurch gekennzeichnet, dass** das Werkstück (22) mit konstanter Drehzahl bearbeitet wird.

6. Verfahren nach einem Ansprüche 3 bis 5, **dadurch gekennzeichnet, dass** der Sollwert (66) ermittelt wird, indem während der Bearbeitung mindestens eines Referenzwerkstücks mittels mindestens eines Referenzwerkzeugs ein Referenzwert des Parameters erfasst und dieser Referenzwert zur Bestimmung des Sollwerts (66) verwendet wird, insbesondere in Abhängigkeit eines Sicherheitszuschlags oder -faktors.

7. Verwendung einer Planschleifmaschine (10) nach Anspruch 1 oder 2 zur Durchführung eines Verfahrens nach einem der Ansprüche 3 bis 6.

## Claims

1. A surface grinding machine (10) comprising at least one grinding tool (12, 13), a workpiece holder (16) for holding at least one workpiece (22) and a drive device (42) for rotationally driving the workpiece holder (16), **characterized in that** for acquiring the energy requirement of the drive device (42), at least one actual value acquiring device (54) for acquiring at least one actual value (64, 70) of at least one parameter relating to a power (P) and/or a current (I) and/or a voltage (V), which characterizes the energy requirement of the drive device (42) required for driving the workpiece holder (16), is provided, further **characterized by** at least one storage device (58) for storing at least one maximum nominal value (66), by at least one evaluating device (56), by means of which using the at least one nominal value (66) evaluation can be performed if the at least one actual value (64, 70) and/or at least one quantity derived from the at least one actual value (64, 70) is admissible or inadmissible, and by at least one control device (52) which is operable depending on the evaluation for controlling the drive device (42), wherein by means of the control device (52), an energy supply to the drive device (42) can be interrupted or the energy supply can be at least decreased so much that admissible actual values can be acquired.

2. The surface grinding machine (10) according to claim 1, **characterized in that** the at least one quantity derived from the at least one actual value (64, 70) relates to a variation of the actual value (64, 70) over a preset period of time.

3. A method for operating a surface grinding machine (10) including at least one grinding tool (12, 13), a workpiece holder (16) for holding at least one workpiece (22) and a drive device (42) for rotationally driving the workpiece holder (16), wherein the workpiece holder (16) is rotationally driven and a workpiece (22) is processed by means of the grinding tool (12, 13), **characterized in that** for acquiring the energy requirement of the drive device (42), at least one actual value (64, 70) of at least one parameter relating to a power (P) and/or a current (I) and/or a voltage (V) is acquired, which characterizes the energy requirement of the drive device (42) required for driving the workpiece holder (16), that by using at least one maximum nominal value (66) it is evaluated whether the at least one actual value (64, 70) and/or at least one quantity derived from the at least one actual value (64, 70) is admissible or inadmissible, and that in case the at least one actual value (64, 70) and/or the quantity derived from the at least one actual value (64, 70) is inadmissible, energy supply to the drive device (42) is interrupted or the energy supply is at least decreased so much that admissible actual values (64, 70) can be acquired.

4. The method according to claim 3, **characterized in that** the at least one quantity derived from the at least one actual value (64, 70) relates to the variation of the actual value (64, 70) over a preset period of time.

5. The method according to any one of claims 3 or 4, **characterized in that** the workpiece (22) is processed with a constant speed.

6. The method according to any one of claims 3 to 5, **characterized in that** the nominal value (66) is determined by acquiring a reference value of the parameter during processing of at least one reference workpiece by means of at least one reference tool and this reference value is used for determining the nominal value (66), in particular depending on a safety margin or factor.

7. Use of a surface grinding machine (10) according to claim 1 or 2 for performing a method according to any one of claims 3 to 6.

## Revendications

1. Rectifieuse plane (10) comprenant au moins un outil de rectification (12, 13), un porte-pièce(s) (16) destiné à maintenir au moins une pièce (22), et un dispositif d'entraînement (42) pour entraîner ledit porte-pièce(s) (16) dans une direction de rotation, **caractérisée par le fait que**, pour détecter le besoin en énergie du dispositif d'entraînement (42), on prévoit au moins un dispositif de détection de valeur réelle (54) pour détecter au moins une valeur réelle (64, 70) d'au moins un paramètre concernant une puissance (P) et/ou un courant (I) et/ou une tension (V), qui caractérise le besoin en énergie du dispositif d'entraînement (42), qui est nécessaire à l'entraînement du porte-pièce(s) (16), **caractérisée en outre par** au moins un dispositif de mémorisation (58) destiné à mémoriser au moins une valeur maximale de consigne (66), par au moins un dispositif d'évaluation (56) au moyen duquel on peut effectuer, en utilisant ladite au moins une valeur de consigne (66), une évaluation de savoir si ladite au moins une valeur réelle (64, 70) et/ou au moins une grandeur dérivée de ladite au moins une valeur réelle (64, 70) est admissible ou inadmissible, ainsi que par au moins un dispositif de commande (52) qui peut être opéré en fonction de ladite évaluation et qui est destiné à commander ledit dispositif d'entraînement (42); par l'intermédiaire dudit dispositif de commande (52), une amenée d'énergie audit dispositif d'entraînement (42) pouvant être interrompue ou l'amenée d'énergie pouvant être réduite au moins d'une manière telle que des valeurs réelles admissibles puissent être détectées.

2. Rectifieuse plane (10) selon la revendication 1, **caractérisée par le fait que** ladite au moins une grandeur dérivée de ladite au moins une valeur réelle (64, 70) concerne un changement de la valeur réelle (64, 70) sur une période donnée.

3. Procédé pour faire fonctionner une rectifieuse plane (10) qui comprend au moins un outil de rectification (12, 13), un porte-pièce(s) (16) destiné à maintenir au moins une pièce (22), et un dispositif d'entraînement (42) pour entraîner ledit porte-pièce(s) (16) dans une direction de rotation, ledit porte-pièce(s) (16) étant entraîné en rotation et une pièce (22) étant usinée au moyen de l'outil de rectification (12, 13), **caractérisé par le fait que**, pour détecter le besoin en énergie du dispositif d'entraînement (42), on détecte au moins une valeur réelle (64, 70) d'au moins un paramètre concernant une puissance (P) et/ou un courant (I) et/ou une tension (V), qui caractérise le besoin en énergie du dispositif d'entraînement (42), qui est nécessaire à l'entraînement du porte-pièce(s) (16), que l'on procède, en utilisant au moins une valeur maximale de consigne (66), à une évaluation de savoir si ladite au moins une valeur réelle (64, 70) et/ou au moins une grandeur dérivée de ladite au moins une valeur réelle (64, 70) est admissible ou inadmissible, et que, au cas où ladite au moins une valeur réelle (64, 70) et/ou ladite grandeur dérivée de ladite au moins une valeur réelle (64, 70) serait inadmissible, une amenée d'énergie audit dispositif d'entraînement (42) est interrompue ou l'amenée d'énergie est réduite au moins d'une manière telle que des valeurs réelles admissibles (64, 70) puissent être détectées.

4. Procédé selon la revendication 3, **caractérisé par le fait que** ladite au moins une grandeur dérivée de ladite au moins une valeur réelle (64, 70) concerne le changement de la valeur réelle (64, 70) sur une période donnée.

5. Procédé selon l'une quelconque des revendications 3 ou 4, **caractérisé par le fait que** ladite pièce (22) est usinée à vitesse de rotation constante.

6. Procédé selon l'une quelconque des revendications 3 à 5, **caractérisé par le fait que** la valeur de consigne (66) est déterminée en saisissant, durant l'usinage d'au moins une pièce de référence au moyen d'au moins un outil de référence, une valeur de référence du paramètre et en utilisant cette valeur de référence pour la détermination de la valeur de consigne (66), en particulier en fonction d'un excédent ou facteur de sécurité.

7. Utilisation d'une rectifieuse plane (10) selon la revendication 1 ou 2, pour la mise en oeuvre d'un procédé selon l'une quelconque des revendications 3 à 6.
